# EUROPEAN PATENT SPECIFICATION

(11) **EP 0 408 905 B1**
(45) Date of publication and mention of the grant of the patent: **26.03.1997**
(21) Application number: 90111453.8
(22) Date of filing: 18.06.1990
(51) Int. Cl.: H04B 10/16, H04B 10/00

(54) **Optical fiber telecommunication line comprising amplifiers of the transmitted signals and amplifiers for said line**
Lichtwellenleiternachrichtenübertragungsleitung mit Verstärker für die übertragenen Signale und Verstärker für diese Leitung
Ligne de télécommunications à fibre optique comportant des amplificateurs pour les signaux transmis et des amplificateurs pour cette ligne

(30) Priority: 21.07.1989 IT 2125889
(43) Date of publication of application: 23.01.1991
(60) Divisional application: 96201234.0
(73) Proprietor: PIRELLI CAVI S.p.A., 20126 Milano (IT)
(72) Inventor: Grasso, Giorgio, Monza (MI) (IT); Righetti, Aldo, Milan (IT); Fontana, Flavio, Cormano (MI) (IT)
(74) Representative: Marchi, Massimo, Dr.

(56) References cited:
- EP-A- 0 221 711
- DD-A- 246 214
- DE-A- 3 317 541
- US-A- 4 761 831
- PATENT ABSTRACTS OF JAPAN, unexamined applications, P field, vol. 10, no. 247, August 26, 1986 THE PATENT OFFICE JAPANESE GOVERNMENT page 27 P 490

## Description

The present invention concerns an optical fiber telecommunication line, for example a submarine line, comprising amplifiers of the transmitted optical signals of the type in which portions of active core optical fiber are used for the amplification.

Also the present invention refers to optical signal amplifiers for optical fiber telecommunication lines, for example submarine lines and the like in which the amplifiers are arranged in positions of difficult access, of the type making use of portions of active core optical fiber.

As known, the optical fibers of the so-called "active core" type comprise inside a "cladding" at least "a core" wherein there are doping substances that besides making the refractive index of the "core" higher than that of the "cladding" become optical radiation sources having a wavelength λ₁ used for the transmission when struck by a radiation having a wavelength λ₂ (different from λ₁) different according to the particular doping substances used.

Example of doping substances having this characteristic are the erbium and the neodymium.

ELECTRONICS LETTERS of April 27, 1989, Vol. 25 No.9, pages 594 to 595 discloses an erbium doped fiber amplifier. WO-A1-86/07221 discloses a neodymium or erbium doped fiber amplifier

More particularly, in the active core optical fibers the emission of optical radiation having a wavelength λ₁ takes place when in the optical fiber travels a radiation having a wavelength λ₂, usually called pumping optical radiation.

This explains the phenomenon of the amplification of the signals made through the so-called active core optical fibers, summarily described above.

The use of the amplifiers provided with active core optical fiber portions in the optical fiber telecommunication submarine lines will supersede the use of optoelectronic repeaters of the transmitted signals for a greater reliability in comparison with these latter thanks to a lower content of electronic components.

In fact, as known, the electronic components present in the optoelectronic repeaters are quite important and are of the type operating at high frequencies.

This because in the optoelectronic repeaters the input optical signal modulated at high frequency is transformed into an electric signal necessarily at high frequency, the electric signal is amplified at high frequency and said amplified electric signal is transformed again into an amplified optical signal still at high frequency which is transmitted at the output of the repeaters.

Just these high frequency electronic components have proved to be not very reliable in time owing to the their failures with the consequent interruption of the line working.

This drawback is clearly very dangerous in se in particular in the optical fiber telecommunication submarine lines; in addition to this there is the difficult access to the optoelectronic repeaters for its repairing and the long time required for the reput into service of the line.

Unlike the optoelectronic repeaters, the known amplifiers provided with active core optical fibers do not contain high frequency electronic components and the only delicate element they comprise is the pumping optical radiation source in general constituted by a laser, a laser diode or the like.

However, although the optical fiber telecommunication lines comprising active core optical fiber amplifiers are more reliable with respect to the optoelectronic repeaters for the less risk of failures, they are not able to communicate to the terminals of the line, and in case of submarine lines to the land ends, danger signals that can arise during the working and in case of failure it is practically impossible to locate the same along the line.

For this reason in the optical fiber telecommunication lines it is important to provide a plurality of reserve optical channels both in the cables and in the repeaters or in the amplifiers and all independent of one another to be set in action when a working optical channel is not utilizable; clearly this constitutes a considerable complexity and a reduction in the effectiveness of the present optical fiber telecommunication lines.

The aim of the present invention is that of improving the reliability and efficiency of the optical fiber telecommunication lines comprising amplifiers of the transmitted signals making possible a control from the terminal stations through optical signals of the efficiency conditions of any whatsoever amplifier of the line and also of the cable optical fibers so as to maintain all the optical channels in optimal working conditions, to reduce the number of the reserve optical channels, to be able to make interventions in order to reput into service an optical channel in case of failure inside an amplifier and to locate immediately from the land ends the position of the line in which the failure is occured and to reduce thus the intervention time.

The object of the present invention is an amplifier for optical fiber telecommunication lines as defined in claim 1.

Another object of the present invention is an optical fiber telecommunication line as defined in claim 3.

The present invention will be better understood by the following detailed description made by way of non limiting example with reference to the figures of the attached sheets of drawing in which:
- FIGURE 1 -: shows schematically an optical fiber telecommunication submarine line according to the invention;
- FIGURE 2 -: shows schematically the elements of an amplifier for optical fiber telecommunication lines according to the invention;
- FIGURE 3 -: shows a component of the amplifier of figure 2;
- FIGURE 4 -: shows schematically a particular embodiment of a circuit of an amplifier element;
- FIGURE 5 -: shows schematically a particular embodiment of another element of the amplifier comprising a laser for the pumping optical radiation;
- FIGURE 6 -: shows schematically an alternative embodiment of the element of the amplifier shown in figure 5;
- FIGURE 7 -: shows a block diagram of a further element of the amplifier.

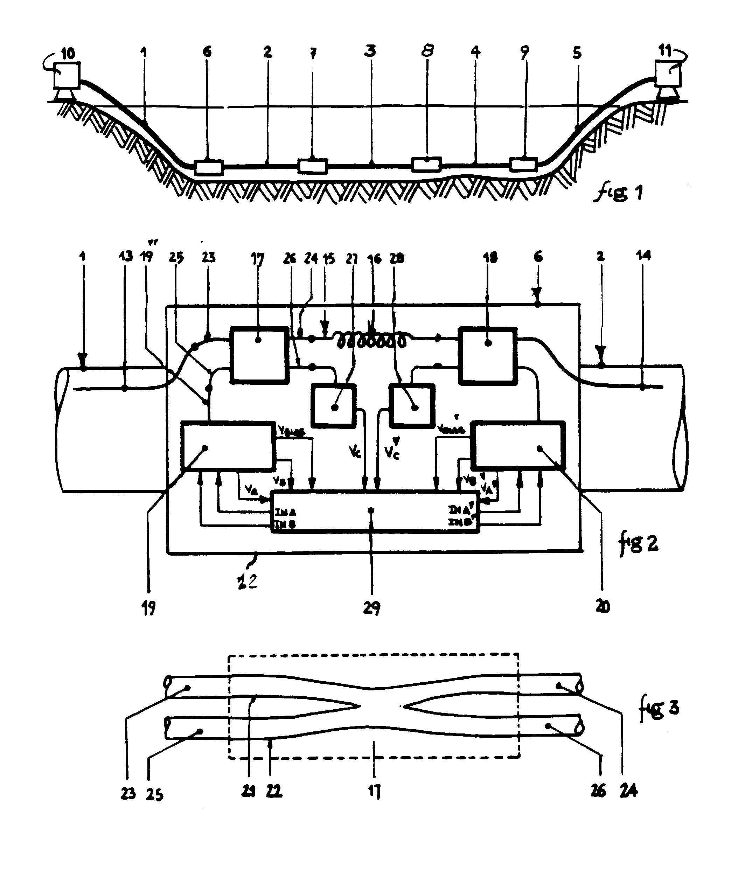

An optical fiber telecommunication submarine line, constituting a particular case of a line according to the invention, is schematized in figure 1; it comprises a plurality of optical fiber cables 1, 2, 3, 4 and 5 arranged in series the one after the other and connected in pair to amplifiers 6, 7, 8 and 9 for the optical signals transmitted along the line.

At the ends of the line there are, a transmitting-receiving station 10 and a receiving-transmitting station 11, respectively.

The optical fiber cables 1, 2, 3, 4, and 5 are all of any whatsoever conventional type and comprise a mechanically resistant armour apt to withstand all the mechanical tensile stresses applied during the laying or the recovery operations of the line, a core comprising at least an optical fiber enclosed inside a tight sheath and electric conductors for feeding the amplifiers of the transmitted signals.

As the optical fiber cables 1, 2, 3,4 and 5, similar or different from one another, are of any whatsoever conventional type, no description of their structure will be given.

Examples of known submarine cables, not to be considered as a limitation to the scope of the invention, are those described in the Italian Patent Publications, IT-B-1175834 and IT-B-1175835 of the same Applicatant.

As previously said cables 1, 2, 3, 4 and 5 are connected to one another in pairs by means of amplifiers of the transmitted signals.

In particular the cables 1 and 2 are mutually connected through the amplifier 6, the cables 2 and 3 are mutually connected through the amplifier 7, the cables 3 and 4 are mutually connected through the amplifier 8 and the cables 4 and 5 are mutually connected through the amplifier 9.

Figure 2 shows schematically one of the amplifiers, for instance the amplifier 6 interposed and connecting two optical fiber cables, for examples cables 1 and 2.

The amplifier 6 shows a tight envelope 12 containing the means 15 which will be described hereinafter, through which there occurs the amplification of the optical signals coming from the cable 1, the transmission of said amplified signals to cable 2, the notification to any one of the stations 10 or 11 about the working conditions of the amplifying means, the control of the conditions of the optical fibers 13 and 14 and the actions of intervention on the amplifying means in consequence of the control signals emitted by one of the stations 10 and/or 11.

The envelope 12 is moreover also mechanically resistant both to the hydrostatic pressure of the ambient where the amplifier is positioned and to the mechanical stresses during the laying or recovery operations of the line.

However what just said above has not to be understood as limitative since the mechanically resistant structure of the amplifier 6 cannot coincide with the tight envelope 12.

Moreover the tight envelope 12 is connected, always in a tight manner, to the ends of the cables 1 and 2 facing the amplifier 6 and all the optical fibers 13 and 14 of the cables 1 and 2, respectively, penetrate the envelope 12 of the amplifier.

For sake of clarity of representation, figure 2 shows only an optical fiber 13 of the cable 1 and only one optical fiber 14 of the cable 2 connected to each other through the means 15 by which the optical signals coming from the optical fiber 13 of the cable 1, which have unavoidably suffered an attenuation during their travel, are amplified and sent into the optical fiber 14 of the cable 2.

Means like those indicated with reference numeral 15 connect all the single optical fiber of the cable 1 to the optical fibers of the cable 2.

Now the means 15 are described; said means 15 are used to carry out the amplification of the optical signals, the control and the notification to one of the terminal stations 10 and 11 (for example station 11) about the working efficiency conditions of the amplifier, and the actions of intervention on the amplifying means in consequence of the control signals coming from the terminal stations 10 and 11 of the line.

The means 15 comprise a portion of active core optical fiber 16 of type known per se and summarily described before.

At the ends of the portion of active core optical fiber 16 there are an optical coupler 17 and an optical coupler 18. The optical fiber 13 is connected to the optical coupler 17, while the optical fiber 14 is connected to the optical coupler 18.

Moreover the optical coupler 17 is connected to a pumping optical radiation source, for example a laser or a laser diode 19, provided with its own electric circuit described hereinafter in detail with reference to figure 5 and the optical coupler 18 is connected to another pumping optical radiation source, in particular a laser or a laser diode 20 provided with its own electric circuit identical to the one associated to laser 19.

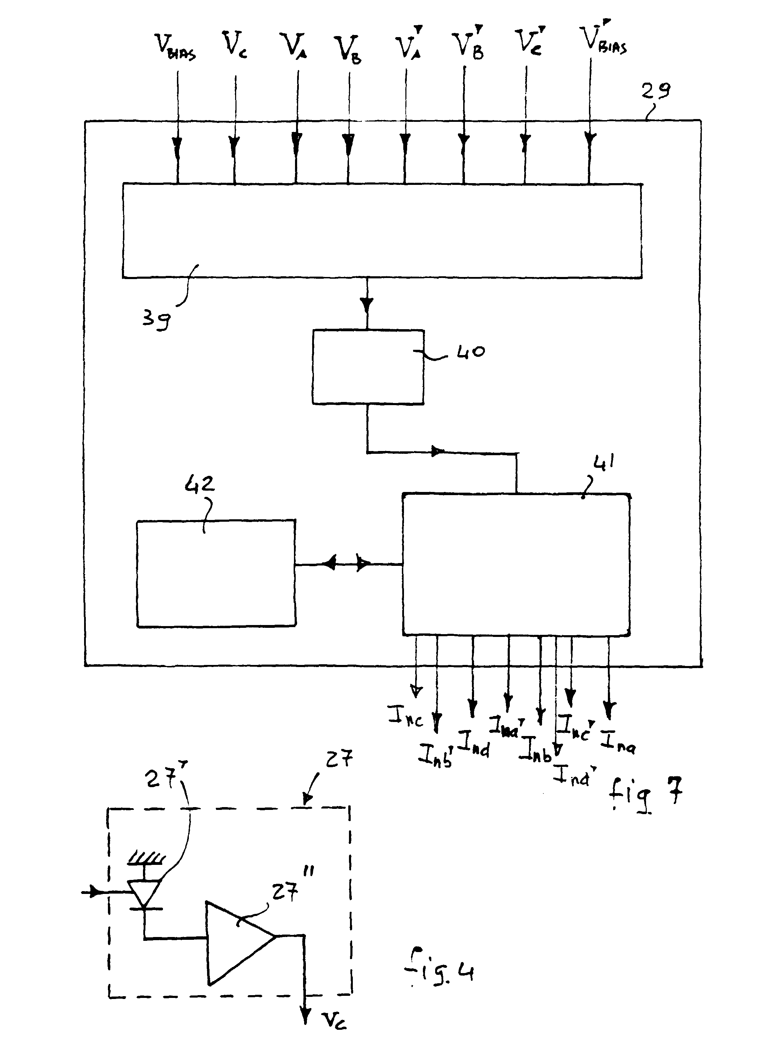

The couplers 17 and 18 are exactly alike and in particular they are four termination dichroic couplers and figure 3 shows an example of said couplers.

As shown in figure 3 the particular coupler 17 represented therein is formed by two optical fiber portions 21 and 22 closely joined together through the melting of the relative cladding in the central parts leaving free the ends indicated with reference numerals 23 and 24 (for the optical fiber portion 21), 25 and 26 (for the optical fiber portion 22), respectively.

In particular the ends 23 and 24 of the coupler 17 are connected, respectively, to the optical fiber 13 and to the active core optical fiber portion 16; the end 25 is connected to laser 19, while the end 26 is connected to a photodiode 27.

Likewise, the coupler 18 exactly alike the coupler 17 is connected to a photodiode 28, too, through the end of the optical fiber length, the other end of which is connected to laser 20.

The particular dichroic couplers 17 and 18, previously described only by way of example, can be substituted with other types of dichroic couplers known per se to the technicians of the field, as the so-called micro-optics couplers, the so-called planar optics couplers and the like.

Moreover the couplers 17 and 18 are optically connected to photodiodes 27 and 28, respectively, better represented in figure 4 and described hereinafter.

The photodiodes 27 and 28 are connected to a microprocessing circuit 29 (described hereinafter with reference to figure 7) to which also the circuits associated to lasers 19 and 20, described hereinafter with reference to figure 5 too, are connected.

Figure 4 shows schematically the photodiode 27 with the relative amplifier 27' which emits, when the laser 19 is working, a signal V_{c}, directed to the microprocessing circuit 29, whose intensity is function of the intensity of the pumping optical radiation at the output of the dichroic coupler 17 through the end 26 of this latter.

The photodiode 28 exactly alike the photodiode 27 is provided with its own amplifier which, when the laser 20 is working, emits a signal V'_{c} directed to the microprocessing circuit 29.

As previously said, each laser 19, 20 is associated to an electric circuit.

Figure 5 schematizes the electric circuit associated to the laser 19 (identical to the electric circuit associated to the laser 20 not shown with a figure).

As shown in figure 5 the real laser 19' is connected to the end 25 of the dichroic coupler 17 through an optical fiber 19" and to a photodiode 30 associated to an amplifier 31 through an optical fiber 19"'.

The signal Vₐ emitted by the amplifier 31, whose value is directly proportional to the intensity of the optical radiation emitted by the laser 19', is sent at the same time to the microprocessing circuit 29 and to a comparator 32. In the comparator 32 the signal Vₐ is compared with a reference signal emitted by a reference signal emitter 33.

The comparison signal V_{bias} emitted by the comparator 32 is sent at the same time to the microprocessing circuit 29 and to a control circuit of a variable current generator 34 feeding the laser 19.

In the connection between the variable current generator 34 and the laser 19 a relay 35 is interposed which can be set in action by a signal I_{nb} emitted by the microprocessing circuit 29.

Moreover the relay 35 is connected to an amplifier 36 of electric signals V_{b} directed to the microprocessing circuit 29, said signals being emitted by the laser 19, when this latter does not operate as laser and works as photodiode.

In addition a predetermined low frequency modulator 37 (and preferably two modulators 37 and 37' at different low frequency) is associated to the conductor for connecting the variable current generator 34 with the relay 35; said predetermined low frequency modulator 37 is provided with a relay 38 set in action through the signals Iₙₐ and I_{nd} emitted by the microprocessing circuit 29. As previously said, the electric circuit associated to the laser 20 is alike that of the laser 19 and therefore it will not be described.

However, the signals of the electric circuit associated to the laser 20 are like those previously given for the electric circuit of the laser 19 and later in the description said signals relating to the electric circuit of the laser 20 will be indicated with the same symbol as that used for the circuit of the laser 19, but accented.

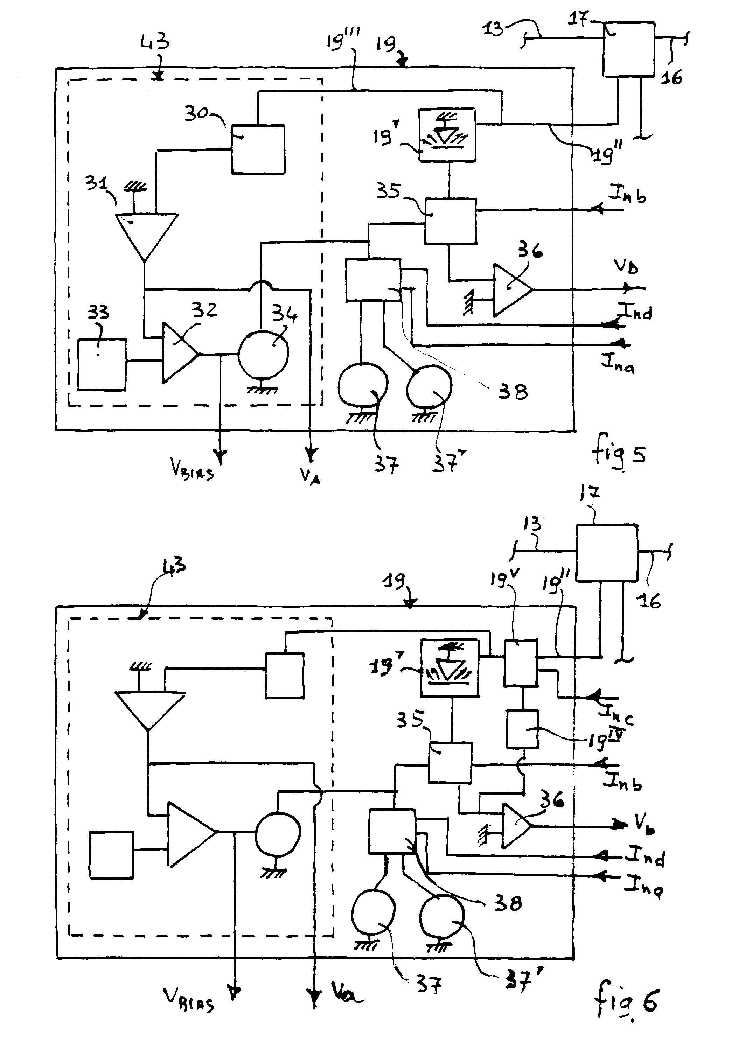

Figure 6 shows an alternative embodiment of the circuit of figure 5 to be used in case there is the danger that the laser 19 goes out of service completely and therefore cannot be used both as source of pumping optical radiation, and as monitoring photodiode.

The alternative embodiment of figure 6 differs from the embodiment of figure 5 only for the fact of providing an optical commutator 19^{V}, that can be set in action through a signal l_{nc} emitted by the microprocessing circuit 29; the optical commutator 19^{V} is inserted in the optical fiber 19" and is connected through a photodiode 19^{IV} to the amplifier 36.

Figure 7 represents a block diagram of the microprocessing circuit 29.

As shown in figure 7 the microprocessing circuit comprises a multiplexer 29 which receives the signals V_{bias}, Vₐ, V_{b} emitted by the electric circuit of the laser 19 and the signals V' _{bias}, V' ₐ, V_{b} emitted by the electric circuit of the laser 20, the signals V_{c} coming from the photodiode 27 and the signals V'_{c} coming from the photodiode 28 (shown in figure 2).

Down line of the multiplexer 39 there is an analog-to-digital converter 40 connected to a microprocessor (CPU) 41 to which a programme circuit (ROM) 42 is associated, said programme circuit (ROM) 42 operating with the microprocessor enables this latter to emit the signals Iₙₐ, I_{nb}, I_{nc} and in case I_{nd} directed to the electric circuit of the laser 19 and the signals I'ₙₐ, I'_{nb}, I'_{nc} and in case I'_{nd} directed to the electric circuit of the laser 20.

Moreover in a line according to the invention there are, at least at one of the two stations 10 and 11 (fig. 1), circuits for monitoring the signals transmitted by the amplifiers 6, 7, 8 and 9 present in the line and a circuit for sending to the line the control signals of the amplifier components; these circuits for monitoring and sending the signals to the line will not be described since known per se and within the capacity of any skilled in the art.

The operation of the line according to the invention and of the amplifiers according to the invention too and present in the line is now described.

During the operation of the line, high frequency optical signals of wavelength λₗ, originated for example in the station 10 (transmitting station) are sent to the optical fibers.

The high frequency optical signals of wavelength λₗ on propagating inside the optical fibers 13 of the cable 1 become attenuated and therefore they require to be amplified in the amplifier 6 before entering the optical fibers 14 of the optical fiber cable 2.

At the same way as previously described, the high frequency optical signals of wavelength λₗ, travelling along the optical fibers of the cable 2, must be amplified in the amplifier 7 before being sent to the optical fiber cable 3.

Likewise, the high frequency optical signals which travelled along the optical fibers of the cable 3 need of being amplified in the amplifier 8 before continuing into the optical fibers of the cable 4.

The same thing happens for the optical signals that travelled the cable 4 which have to be amplified by the amplifier 9 to be conveyed to the cable 5 so as to reach the arriving and receiving station 11.

The above is applied also to the transmitting station when this latter is the station 11 and the receiving one is the station 10.

As previously said, figure 2 represents schematically the amplifier 6 previously described in its essential components; the other amplifiers 7, 8 and 9 present in the line are like the amplifier 6.

In the amplifier 6 only one of the two lasers, for instance that indicated with reference numeral 19 is working to sent the pumping energy of wavelength λ₂ necessary for the amplification, to the portion of active core optical fiber 16.

The other laser or pumping optical radiation source, marked with reference numeral 20, is not active as emitting optical source being it kept as reserve and so acts as monitoring photodiode.

The pumping optical radiation of wavelength λ₂ can be modulated at low frequency m6, for example thanks to the variable current generator 34 of fig. 5, for instance with a programmed modulation in the said generator, called also by the skilled in the art "tone"; m6 iS different from the low frequency modulation of the pumping optical radiation of the other amplifiers.

In particular in the amplifiers 6, 7, 8 and 9 the low frequency modulation or "tone" of the single pumping optical radiation respectively has values m6, m7, m8 and m9 different from one another.

All the tones m6, m7, m8 and m9 different from one another are transmitted in the line and are monitored in the receiving station as signals indicating which are the lasers working in the various amplifiers.

The low frequency modulation of the pumping optical radiations λ₂ does not disturb the transmission optical signals λ₁ since these are modulated at high frequency.

As said above, the transmitting optical signals λₗ modulated at high frequency, attenuated in consequence of the fact that they travelled along the optical fiber 1, enter the amplifier 6.

The transmitting optical signals λₗ penetrate the active core optical fiber 16 through the dichroic coupler 17; also the pumping optical radiation of wavelength λ₂ emitted by the source or laser 19 enter the active core optical fiber 16.

Inside the active core optical fiber 16 , owing to the previously explained phenomenon, there is the amplification of the optical signals of wavelength λₗ and through the dichroic coupler 18 the amplified signals are introduced into the optical fiber 14 of the cable 2.

The intensity of the pumping optical energy at the input of the active core optical fiber portion, expressed as electric signal V_{c}, is monitored through the photodiode 27 associated to the dichroic coupler 17.

The intensity of the pumping optical energy at the output of the active core optical fiber portion, expressed as signal V'_{b} is monitored through the electric circuit associated to the laser 20 out of service as laser and operating as detecting photodiode.

The two electric signals V_{c} and V'_{b} are sent to the microprocessing circuit 29.

Usually the laser 19 works very well and this thanks to the action of that part of electric circuit enclosed inside the dashed line 43.

In fact a signal Vₐ, function of the intensity of the pumping optical radiation emitted by the laser 19, is monitored through the photodiode 30 and the amplifier 31.

The signal Vₐ, besides being sent to the microprocessing circuit 29 is sent also to the comparator 32 which operating together with the emitter of reference signals 33 provides to control the variable current generator 34 which acts on the laser 19 so that the intensity of the pumping optical radiation remains modulated always in the same way.

But when unavoidably the passing of time causes the ageing of the laser 19, the signals Vₐ and V_{bias} notify said piece of information to the microprocessing circuit.

In this situation the microprocessing circuit is programmed through the memory 42 to emit a signal Iₙₐ which acting on the relay 38 causes the intervention of the low frequency modulator 37.

Said modulator 37 obliges the laser 19 to emit an alarm signal with a low frequency modulation or tone m61 that causes the superimposing of an equal low frequency modulation of the transmission optical signals of wavelength λₗ that can be intercepted as alarm signal at the receiving station 11. Moreover the microprocessing circuit, programmed through the memory 42, is also able to monitor from the received signals Vₐ and V_{bias} the efficiency or not of the comparator 32 - reference signal emitting device 33 unit; in case of faults in said unit, the microprocessing circuit could emit a signal I'ₙₐ not indicated in the figure which acting on the relay 38 and on the modulator 37 will oblige this latter to emit an alarm signal with a modulation m62.

In these cases the transmitting station 10 by overlapping a low frequency modulation m6/10 and m6/10' on the optical signals modulated at high frequency of λ₁ can send a control signal along the line.

This control signal m6/10 causes a modulation on the residual pumping power 11a of wavelength λ₂ that is monitored by the microprocessing circuit 29 of the amplifier 6 as a control signal directed thereto and obliges the microprocessing circuit to emit signals Iₙb and I'_{nb} to the relais 35 for switching off the laser source 19 and for switching on the laser source 20, respectively.

In this way the perfect working of the optical channel for the transmission of telecommunication signals is reset in the case in which the laser 19 is no more efficient to supply the necessary pumping energy but it is always able to operate very well as monitoring photodiode.

In the case in which the laser 19, when exhausted as pumping optical source, is not even able to operate as monitoring photodiode in the amplifier, the alternative embodiment of figure 6 is used. In this case the microprocessing circuit 29 is programmed to emit, in addition to the control signal I_{nb} or I'_{nb} also the control signal I_{nc} or I'_{nc}, when it receives from the transmitting station 10 the control signal m6/10 or m6/10'.

By means of the emission of the signal I_{nc} or I'_{nc}, the optical commutator 19" is set in action and the optical fiber 19' is placed into communication with the monitoring photodiode 19‴ connected to the amplifier 36 from which the signals V_{b} (or V'_{b}) directed to the microprocessing circuit 29 are emitted.

What given for the amplifier 6 operation takes place also for the amplifiers 7, 8 and 9.

Moreover the control of the efficiency conditions of the various optical fibers present in the line derives consequently from the particular structure and from the particular operation of the amplifiers present in the line itself.

In fact the presence of a fault in the optical fiber of the line can be immediately monitored, located and transmitted to the terminal stations 10 and 11 and all this happens as follows.

If an optical fiber of a cable, for instance the optical fiber 13 of the cable 1 is damaged or broken, the optical signals of wavelength λₗ do no more reach the amplifier 6.

In this situation the pumping optical energy emitted by the laser 19, not being used for the amplification of the signal λₗ does not suffer practically attenuations inside the active core optical fiber 16.

It follows that the microprocessing circuit 29, through the comparison of the signals Vₐ and V'_{b} recognizes the existence of an anomalous situation not depending on the amplifier. In this case the microprocessing circuit 29 is programmed to emit and it emits a signal I_{nd} directed to the relay 38 which causes the intervention of the modulator 37' with the emission of a modulated alarm signal directed to the terminal station 11.

Since the amplifiers down line of the amplifier 6 act as this latter, the location of the position of the fault in the line of the optical fiber rupture is promptly found.

From the previously given description and the following considerations it is clear that by means of an optical fiber telecommunication line according to the present invention and the amplifiers according to the invention the aimed purposes are achieved.

The action of associating two lasers to the ends of an active core optical fiber inside the amplifier, a working laser and a reserve laser, the latter operating as monitoring photodiode, means a reduction in the risks of the working interruption of the line since, when one of the two lasers is damaged, it can be automatically substituted with the other one avoiding any working interruption in the transmission of signals.

Moreover the association to the lasers of circuits operating with low frequency modulations that per se are very reliable and anyhow more reliable than the high frequency electronic circuits of the optoelectronic repeaters, permits a continuous control from the terminal stations and in the particular case of the land ends submarine lines of the working conditions of all the amplifiers of the line.

Moreover the possibility of sending transmission signals and control signals to the various amplifiers from the terminal stations, by overlapping a low frequency modulation upon the high frequency modulation, permits to maintain the line in optimal working conditions without using additional optical fibers in the cables exclusively used for sending these control signals.

Further, the fact that each amplifier according to the invention emits proper distinct signals that are received and recognized by the stations 10 and 11 at the ends of the line permits in case of damage of any whatsoever optical fiber of a cable the exact location of the same and this besides constituting a monitoring of the efficiency of the optical fibers present in the various cables permits in case of failure a prompt intervention for the repairing.

Although the particular embodiment of a line according to the invention is an optical fiber telecommunication submarine line, this has not to be considered a limitation to the scope of the present invention since this latter includes also the earth and the overhead lines, as for instance optical fiber overhead earth conductor lines.

## Claims

1. Amplifier (6) for optical telecommunication lines comprising inside a tight envelope (12), which can be connected to one of the ends of each of a first and a second optical fiber cable (1, 2), at least a portion (16) of active core optical fiber whose ends are optically connected to an optical fiber (13) of the first cable (1) and to an optical fiber (14) of the second cable (2), a first source (19) of pumping optical radiations being connected to one of the two ends of the active core optical fiber portion (16), said amplifier (6) being characterized by the fact of comprising a second source (20) of pumping optical radiation connected to the other end of the active core optical fiber portion (16), a microprocessing circuit (29) connected to the two ends of the active core optical fiber portion (16) which monitors the variations of intensity of the pumping optical radiations inside the active core optical fiber portion (16) and sends signals which are function of said variations to a control circuit of at least one low frequency modulator (37) which is connected to one of the pumping optical sources to modulate the pumping optical radiation and a working commutator (35) for switching off the first and for switching on the second pumping optical radiation source (19, 20).

2. Amplifier (6) according to claim 1, characterized by the fact that at each end of the active core optical fiber portion (16) the connection of this latter with an optical fiber (13, 14) of the cable (1, 2), with the pumping optical radiation source (19, 20) and with the circuit connected to the two ends of the active core optical fiber portion (16) is carried out by means of a dichroic coupler (17, 18).

3. Optical fiber telecommunication line comprising at least a first and a second optical fiber cable (1, 2) arranged in series and connected together by means of an amplifier (6) according to claim 1, characterized by the fact that at least one of its ends can be connected to a further low frequency modulator for modulating the optical radiation for the transmission of the signals.

4. Optical fiber telecommunication line according to claim 3, characterized by the fact that inside the amplifier (6) at each end of the active core optical fiber portion (16) the connection of this latter with an optical fiber (13) of the cable (1), with the pumping optical radiation source (19) and with the circuit connected at the two ends of the active core optical fiber portion (16) is made by means of a dichroic coupler (17).

5. Optical fiber telecommunication line according to claim 3, comprising a plurality of optical fiber cables (1, 2, 3, 4, 5) arranged in series and connected together in pairs by amplifiers (6, 7, 8 and 9) of transmitted signals,
characterized by the fact that the low frequency modulators (37, 37') of the single amplifiers (6, 7, 8 and 9) cause low frequency modulations of the pumping energy different from one another and different from the low frequency modulation carried out at the end of the line for the transmission signal.

## Patentansprüche

1. Verstärker (6) für optische Telekommunikationsleitungen der in einer dichten Umhüllung (12), die mit einem der Enden jeweils eines ersten und eines zweiten optischen Faserkabels (1, 2) verbunden sein kann, folgende Elemente aufweist: mindestens einen Teil (16) eines aktiven optischen Faserkerns, dessen Enden optisch mit einer optischen Faser (13) des ersten Kabels (1) und mit einer optischen Faser (14) des zweiten Kabels (2) verbunden sind, eine mit einem der beiden Enden des aktiven optischen Faserkernstücks (16) verbundene erste Quelle (19) optischer Pumpstrahlung, wobei der Verstärker (6) dadurch gekennzeichnet ist, daß er die folgenden Elemente aufweist: eine mit dem anderen Ende des aktiven optischen Faserkernstücks (16) verbundene zweite Quelle (20) zum Pumpen optischer Strahlung, eine mit den beiden Enden des aktiven optischen Faserkernstücks (16) verbundene Mikroprozessorschaltung (29), die die Veränderungen der Intensität der optischen Pumpstrahlung im aktiven optischen Faserkernstück (16) überwacht und von diesen Veränderungen abhängige Signale an eine Steuerungsschaltung mindestens eines Niederfrequenzmodulators (37) sendet, der zum Modulieren der optischen Pumpstrahlung mit einer der optischen Pumpquellen und zum Abschalten der ersten und zum Einschalten der zweiten optischen Pumpstrahlungsquelle (19, 20) mit einem Arbeitskommutator (35) verbunden ist.

2. Verstärker (6) nach Anspruch 1, dadurch gekennzeichnet, daß die Verbindung jeden Endes des aktiven optischen Faserkernteils (16) mit einer optischen Faser (13, 14) des Kabels (1, 2), mit der optischen Pumpstrahlungsquelle (19, 20) und mit der mit den beiden Enden des aktiven optischen Faserkernteils (16) verbundenen Schaltung über einen dichroitischen Koppler (17, 18) durchgeführt wird.

3. Optische Fasertelekommunikationsleitung mit mindestens einem ersten und einem zweiten in Reihe angeordneten und über einen Verstärker (6) nach Anspruch 1 verbundenen optischen Faserkabel (1, 2), dadurch gekennzeichnet, daß mindestens eines seiner Enden mit einem weiteren Niederfrequenzmodulator zum Modulieren der optischen Strahlung für die Übermittlung der Signale verbunden sein kann.

4. Optische Fasertelekommunikationsleitung nach Anspruch 3, dadurch gekennzeichnet, daß im Verstärker (6) die Verbindung jeden Endes des aktiven optischen Faserkernteils (16) mit einer optischen Faser (13) des Kabels (1), mit der optischen Pumpstrahlungsquelle (19) und mit der an den beiden Enden des aktiven optischen Faserkernteils (16) verbundenen Schaltung über einen dichroitischen Koppler (17) erfolgt.

5. Optische Fasertelekommunikationsleitung nach Anspruch 3, mit mehreren in Reihe geschalteten und paarweise durch Verstärker (6, 7, 8 und 9) übertragener Signale verbundenen optischen Faserkabeln (1, 2, 3, 4, 5), dadurch gekennzeichnet, daß die Niederfrequenzmodulatoren (37, 37') der einzelnen Verstärker (6, 7, 8 und 9) Niederfrequenzmodulationen der Pumpenergie erzeugen, die sich voneinander und von der am Ende der Leitung am Übertragungssignal vorgenommenen Niederfrequenzmodulation unterscheiden.

## Revendications

1. Amplificateur (6) pour des lignes de télécommunication optiques comprenant à l'intérieur d'une enveloppe étanche (12), qui peut être connectée à une des extrémités de chacun d'un premier et d'un deuxième câbles (1, 2) à fibre optique, au moins une partie (16) d'une fibre optique à coeur actif, dont les extrémités sont connectées optiquement à une fibre optique (13) du premier câble (1) et à une fibre optique (14) du deuxième câble (2), une première source (19) de radiations optiques de pompage étant connectée à l'une des deux extrémités de la partie (16) de fibre optique à coeur actif, ledit amplificateur (6) étant caractérisé par le fait qu'il comprend une deuxième source (20) de radiations optiques de pompage connectée à l'autre extrémité de la partie (16) de fibre optique à coeur actif, un circuit de microtraitement (29) connecté aux deux extrémités de la partie (16) de fibre optique à coeur actif qui contrôle les variations d'intensité des radiations optiques de pompage à l'intérieur de la partie (16) de fibre optique à coeur actif et envoie des signaux qui sont fonction desdites variations à un circuit de commande d'au moins un modulateur basse fréquence (37) qui est connecté à l'une des sources optiques de pompage pour moduler les radiations optiques de pompage et un commutateur de travail (35) pour mettre hors fonction la première source (19) de radiations optiques de pompage et pour mettre en fonction la deuxième source (20) de radiations optiques de pompage.

2. Amplificateur (6) selon la revendication 1, caractérisé par le fait qu'à chaque extrémité de la partie (16) de fibre optique à coeur actif, la connexion de cette dernière à une fibre optique (13, 14) du câble (1, 2), à la source (19, 20) de radiations optiques de pompage et au circuit connecté aux deux extrémités de la partie (16) de fibre optique à coeur actif est effectuée au moyen d'un coupleur dichroïque (17, 18).

3. Ligne de télécommunication à fibre optique comprenant au moins un premier et un deuxième câbles (1, 2) à fibre optique montés en série et connectés l'un à l'autre au moyen d'un amplificateur (6) selon la revendication 1, caractérisée par le fait qu'au moins une de ses extrémités peut être connectée à un autre modulateur basse fréquence pour moduler les radiations optiques destinées à la transmission des signaux.

4. Ligne de télécommunication à fibre optique selon la revendication 3, caractérisée par le fait qu'à l'intérieur de l'amplificateur (6) à chaque extrémité de la partie (16) de fibre optique à coeur actif, la connexion de cette partie à une fibre optique (13) du câble (1), à la source (19) de radiations optiques de pompage et au circuit connecté aux deux extrémités de la partie (16) de fibre optique à coeur actif est effectuée au moyen d'un coupleur dichroïque (17).

5. Ligne de télécommunication à fibre optique selon la revendication 3, comprenant une pluralité de câbles (1, 2, 3, 4, 5) à fibre optique,montés en série et connectés ensemble par paires au moyen d'amplificateurs (6, 7, 8 et 9) de signaux transmis, caractérisée par le fait que les modulateurs basse fréquence (37, 37') des amplificateurs individuels (6, 7, 8, et 9) produisent des modulations basse fréquence de l'énergie de pompage qui sont différentes les unes des autres et différentes de la modulation basse fréquence effectuée à l'extrémité de la ligne pour le signal de transmission.
